# EUROPEAN PATENT APPLICATION

(11) **EP 1 832 761 A1**
(43) Date of publication of application: **12.09.2007**
(21) Application number: 07250901.1
(22) Date of filing: 05.03.2007
(51) Int. Cl.: F16B 41/00

(54) **Self-retaining bolt**

(30) Priority: 10.03.2006 US 372780
(71) Applicant: United Technologies Corporation, Hartford, CT 06101 (US)
(72) Inventor: Shirk, Nathan A., Hartford, CT 06114 (US); Mitchell, Tyler J., Harrisville, NY 13648 (US); Naumec, Charles R., Mansfield Center, CT 06250 (US)
(74) Representative: Leckey, David Herbert

(57) **Abstract**

A bolt (30) comprises a head (34) and a shank (32), which includes a distal end (32A) and a proximal end (32B). The head (34) is adjacent to the proximal end (32B) of the shank (32A) and includes a retention flange (36,38) configured to engage with a groove in a component.

## Description

### BACKGROUND

The present invention relates to a bolt and a bolt assembly. More particularly, the present invention relates to a self-retaining bolt with a retention flange, and a bolt assembly including a component with a groove and a self-retaining bolt with a retention flange that is configured to mate with the groove.

A bolt having a shank and a head is often used to connect two or more components together. After the bolt is assembled with the components, it is typically desirable for the bolt to remain in place in order to keep the components connected, and in the case of a bolt being used in a moving machine, engine, or otherwise, in order to prevent the bolt from interfering with other parts of the machine or engine.

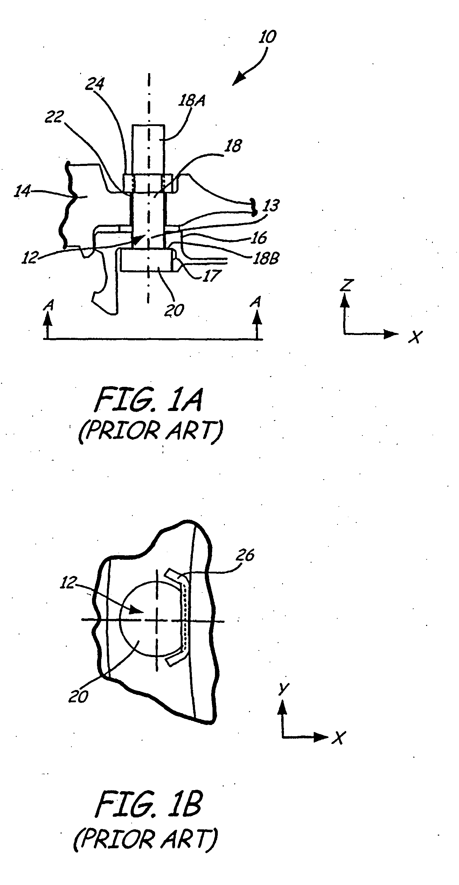

Slab (or tee) head and D-head bolts are configured to resist rotation about their respective longitudinal axes (which is typically represented by an imaginary line running through the shank of the bolt) when torque is applied, and thus, help prevent the bolt from unfastening. In some applications, it is also desirable for slab and D-head bolts (as well as other types of bolts) to resist movement in a direction along the longitudinal axis of the bolt. When a bolt is "vertically assembled," a longitudinal axis of the bolt is oriented vertically (i.e., along a z-axis direction, where orthogonal x-z axes are shown in FIG. 1A) during installation or after the bolt is installed. This configuration may be found in many different types of assemblies, including, for example, a gas turbine engine application, where vertically oriented bolts are common during the assembly process. Due to gravity and other forces, such as forces generated by vibrational movement of the assembly, the vertical orientation encourages the bolt to move vertically and out of the socket (or opening) in which the bolt is positioned. In the case of a gas turbine engine, or another assembly with moving components, a retention device, such as a lock tab, a lock wire, or a tab washer, may be used to hold the bolt in place during assembly, prior to attaching a nut to the bolt. A nut threaded onto the bolt shank (opposite the head of the bolt) typically secures the bolt during engine operation.

In some applications, the use of a retention device complicates the assembly process and may cause ergonomic concerns. For example, in small-scale assemblies, it may be difficult to apply the retention device and/or the retention device may not fit within the available space. Furthermore, in assemblies including a large quantity of bolts that need to be retained, the addition of multiple retention devices may increase assembly time and cost, as well as increase the risk of an improper installation.

### BRIEF SUMMARY

The present invention is a bolt that comprises a shank with a distal end and a proximal end, and a head adjacent to the proximal end of the shank. The head includes a retention flange configured to engage with a groove in a component.

### BRIEF DESCRIPTION OF THE DRAWINGS

FIG. 1A is a plan view of a vertical assembly of a prior art bolt, which is connecting a first component and a second component.
FIG. 1B is a plan view of the bolt of FIG. 1A taken along line A-A in FIG. 1A and shows a prior art retention device.
FIGS. 2A - 2C are perspective and plan views of a first embodiment of a bolt in accordance with the present invention.
FIG. 3 is a plan view of a gas turbine engine vane assembly that includes the bolt shown in FIGS. 2A-2C.
FIGS. 4A - 4C illustrate an installation of a bolt in accordance with the first embodiment of the present invention.
FIG. 5 is a plan view of the installed bolt of FIG. 4C, after the bolt is rotated in an opposite direction.
FIGS. 6A - 6C are perspective and plan views of a second embodiment of a bolt in accordance with the present invention.
FIGS. 7A - 7C are perspective and plan views of a third embodiment of a bolt in accordance with the present invention.
FIG. 8 illustrates an installation of the bolt of FIGS. 7A-7C, where the bolt is ' introduced into a gap in a groove in a mating part.

### DETAILED DESCRIPTION

The present invention is a self-retaining bolt that is configured to resist movement in a direction along its longitudinal axis (which is represented by an imaginary line running through the shank of the bolt) after the bolt is engaged with a groove in a component. Hereinafter, a "groove in a component" encompasses any type of groove, whether the groove is defined in a single component, or whether a groove is defined by a space between two or more components.

A bolt in accordance with the present invention includes a shank, which has a distal end and a proximal end, and a head adjacent to the proximal end of the shank and including a flange that is configured to engage with a groove in a component. In some embodiments, the shank is at least partially threaded. A bolt in accordance with the present invention is "self-retaining" because when the flange of the bolt head is engaged with a groove in a component, the bolt is inclined to resist movement in a direction along its longitudinal axis and retain its position. Such a bolt is "self-retaining" because it does not require a tool or a separate retention device to hold the bolt in position, as discussed in the Background section. In this way, the flange on the head of the bolt can also be referred to as a "retention flange." In one embodiment, the bolt head is also shaped to resist rotation when torque is applied, and thus retain its orientation. Examples of suitable bolt head shapes include, but are not limited to, a slab (or tee) or D-shaped head, which are known in the art. In the embodiments discussed below, the flange of the bolt head extends in a generally lateral direction (i.e., generally perpendicular to the longitudinal axis of the bolt) and mates with a groove in the component, where the groove also extends in a generally lateral direction.

As stated in the Background section, a retention device (e.g., a lock tab, a lock wire, or a tab washer) is conventionally used to limit movement of a bolt along its longitudinal axis during an assembly process in which the bolt is vertically assembled and before a nut is attached to the bolt. It is especially desirable to limit movement of the bolt along its longitudinal axis in a vertical assembly, where the longitudinal axis of the bolt is oriented in a vertical direction (i.e., z-axis direction). FIG. 1A is a plan view of vertical assembly 10 of bolt 12, which is connecting first component 14 and second component 16. Bolt 12 is a conventional bolt that is known in the art. A longitudinal axis 13 of bolt 12 is oriented in a "vertical" direction, which is along the z-axis direction (see orthogonal x-z axes). First component 14 may be, for example, a rotor disk, and second component 16 may be, for example, a side plate. Although second component 16 includes groove 17, bolt 12 is not engaged with groove 17 in any way.

Bolt 12 includes shank 18 with distal end 18A and a proximal end 18B, and head 20. In vertical assembly 10, bolt 12 is introduced into overlapping openings 22 in first and second components 14 and 16 in order to connect first and second components 14 and 16. Nut (or other fastening device) 24, which is attached to distal end 18A of shank 18, helps retain shank 18 within overlapping openings 22. Prior to attaching nut 24 or if nut 24 is detached from distal end 18A of bolt 12, bolt 12 is likely to move in the z-axis direction and "fall out" of openings 22. This is especially undesirable if vertical assembly 10 is a part of a gas turbine engine because a loose bolt 12 in the gas turbine engine may adversely affect the engine operation, force disassembly of the gas turbine engine to remove bolt 12, or cause damage to other hardware within the gas turbine engine.

As shown in FIG. 1 B, a prior art retention device 26 is attached to bolt 12 head 20 in order to limit movement of bolt 12 along its longitudinal axis 13 (which is perpendicular to the plane of the image of FIG. 1B) before nut 24 is attached. FIG. 1B is a plan view of bolt 12 taken along line A-A in FIG. 1A. A part of head 20 of bolt 12 is engaged with retention device 26 (i.e., the part of head 20 that is shown in phantom in FIG. 1B), and retention device 26 holds head 20 in its original position (or close to its original position) prior to attaching nut 24 (shown in FIG. 1A) to shank 18. Retention device 26 limits movement of bolt 12 along its longitudinal axis 13 during assembly. Retention device 26 is any retention device known in the art, such as a lock tab, lock wire, or tab washer. As stated in the Background, the use of retention device 26 complicates an assembly process in some situations, such as small-scale assemblies and/or assemblies including a large quantity of bolts that need to be retained.

A bolt in accordance with the present invention addresses the difficulties associated with retention devices because the inventive bolt is self-retained. More particularly, the bolt includes a retention flange that is configured to engage with a component. The mating of the flange and groove limits movement of the bolt along its longitudinal axis, even without the use of a nut (or other fastening device). The bolt configuration of the present invention may be used instead of, or in addition to, an external retention device (e.g., retention device 26). Because an external retention device is not necessary, a bolt in accordance with the present invention is better suited for small-scale assemblies than bolt 12 of FIGS. 1A and 1B, which requires external retention device 26 in order to limit movement in a direction along the longitudinal axis of the bolt. Furthermore, the elimination of an external retention device also helps to streamline an assembly process, reduces the number of parts required for assembly, and may reduce the cost and/or risk of improper installation.

A bolt in accordance with the present invention is useful in gas turbine engines, where it is common for components to be assembled with bolts in a vertical orientation, because the retention flange of the bolt holds the bolt in position prior to securing the bolt in position with a nut. A bolt in accordance with the present invention is also useful in applications in which it is especially crucial that components remain connected and bolts do not loosen. In particular, the retention flange of the bolt helps to ensure that the bolt remains in place, even if a nut (or other fastening device) is detached from the bolt, such as when the components are being disassembled.

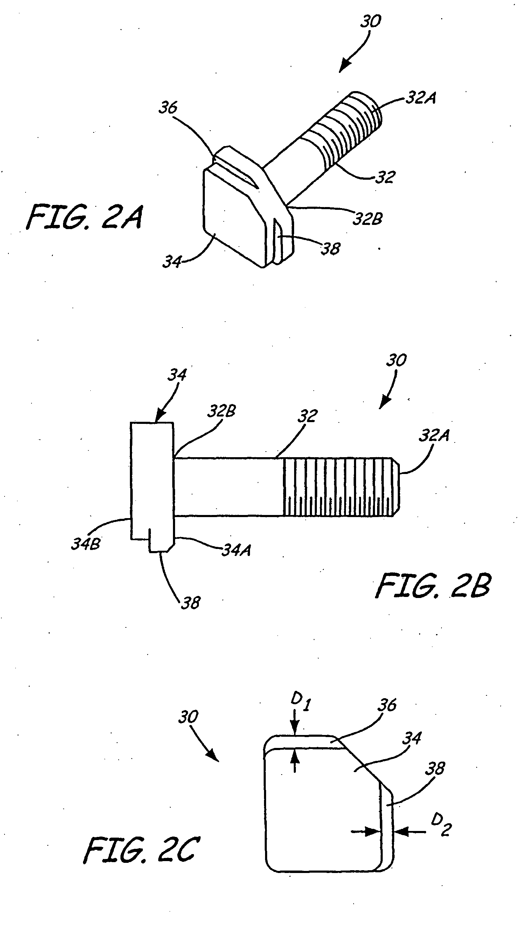

FIG. 2A is a perspective view of bolt 30 in accordance with a first embodiment of the present invention. Bolt 30 includes shank 32, with distal end 32A and proximal end 32B, and head 34, which is adjacent to proximal end 32B of shank 32. In some embodiments, head 34 is integral with shank 32 (i.e., shank 32 and head 34 are formed from a single piece of material), while in other embodiments, head 34 and shank 32 are separate pieces that are attached using any suitable attachment means known in the art, such as, but not limited to, mechanical attachment means (e.g., threads), welding, or adhesive. In the first embodiment of the present invention, head 34 of bolt 30 is shaped to resist rotation when torque is applied. While head 34 of bolt 30 is shown to be a slab (or tee) head, head 34 may be any shape known in the art to resist rotation, such as, but not limited to, a D-shape.

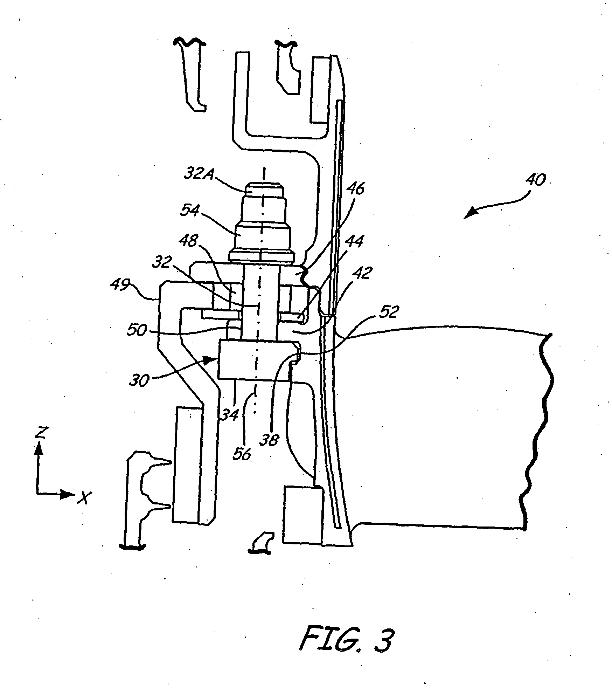

Head 34 includes first flange 36 and second flange 38, where first flange 36 and second flange 38 are generally perpendicular to each other. First and second flanges 36 and 38 are each configured to engage with a groove in a component after bolt 30 is assembled in an assembly. This is illustrated and further discussed in reference to FIG. 3.

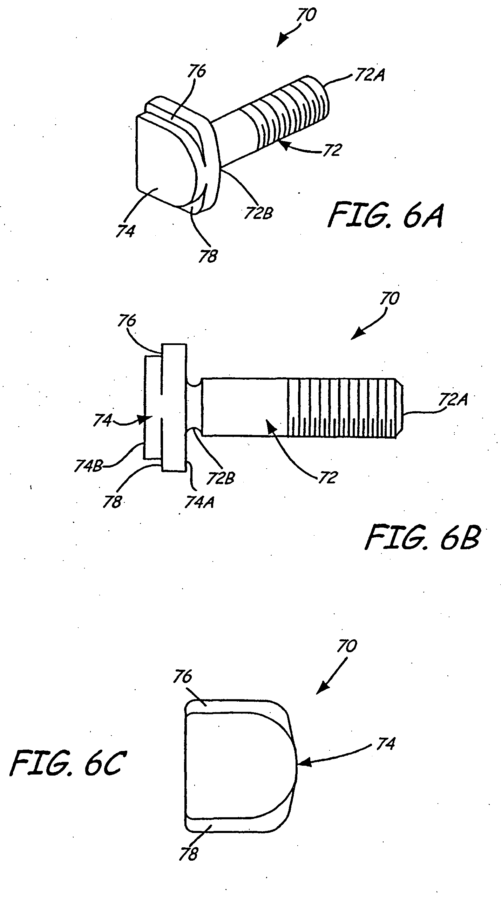

FIG. 2B is a plan view of bolt 30 of FIG. 2A, and illustrates flange 38 extending from head 34. Distal end 32A of shank 32 is tapered and threaded. The tapered end 32A of shank 32 is a design element that may be modified in alternate embodiments. For example, proximal end 32B of shank 32 may also bc tapered (e.g., tapered proximal end 72B of shank 72 in the embodiment of bolt 70 shown in FIGS. 6A-6C). One skilled in the art may also modify the dimensions of shank 32, head 34, and flanges 36 and 38 in accordance with the particular application of bolt 30. Although flange 38 is shown to be adjacent to distal end 34A of head 34, in an alternate embodiment, flange 38 is adjacent to proximal end 34B of head 34. Similarly, flange 36 can be adjacent to proximal end 34A of head 34 in an alternate embodiment.

FIG. 2C is a plan view of bolt 30 of FIG. 2A and illustrates flanges 36 and 38 extending from head 34. Depth D) of flange 36 and depth D₂ of flange 38 depend upon the size of the groove with which flange 36 and flange 38, respectively, are configured to engage. In some applications, the grooves with which flanges 36 and 38 are configured to engage preexist in a component, in which case flanges 36 and 38 are shaped and sized to fit within the preexisting groove. In other situations, the shape and size of flanges 36 and 38 are first determined, and then a corresponding groove is formed in a component. In some embodiments, depth D) of flange 36 and depth D₂ of flange 38 are equal, while in other embodiments, depth D₁ of flange 36 and depth D₂ of flange 38 are different.

FIG. 3 is a plan view of gas turbine engine vane assembly 40 that includes bolt 30 of FIGS. 2A-2C. Bolt 30 is vertically oriented in assembly 40, and connects vane assembly flange 42, seal 44, inner duct segment assembly 46, and spacer 48. Specifically, shaft 32 of bolt 30 is introduced into openings 50 within vane assembly flange 42, seal 44, inner duct segment assembly 46, spacer 48, and head 34 of bolt 30 engages with vane assembly flange 42. Inner air seal 49 is positioned between seal 44 and inner duct assembly 46. As known in the art, head 34 of bolt 30 is preferably larger than the size of openings 50 so that head 34 of bolt 30 does not move through openings 50. Of course, if head 34 of bold 30 is the same size as or smaller than openings 50, a washer may be used in conjunction with bolt 30.

Flange 38 of head 34 of bolt 30 is engaged with groove 52 in vane assembly flange 42, which helps limits movement of bolt 30 in a z-direction (i.e., in a direction along its the longitudinal axis 56 of bolt 30), where orthogonal x-z axes are shown in. FIG. 3. As a result of the mating of flange 38 and groove 52, bolt 30 substantially retains its original position prior to the attachment of nut 54, and/or even if nut 54 is detached from distal end 32A. Because flange 38 mates with groove 52, vane assembly flange 42 can be referred to as the "mating part" for bolt 30. Alternatively, flange 36, rather than flange 38, can engage with groove 52, in which case bolt 30 would be rotated about 90° because flange 36 and flange 38 are generally perpendicular to each other.

Self-locking nut 54 is attached to distal end 32A of shank 32 and also helps secure bolt 30 in place with respect to vane assembly flange 42, seal 44, inner duct segment assembly 46, and spacer 48. In addition to mating flange 38 and groove 52, self-locking nut 54 helps limit movement of bolt 30 along the z-axis direction. The mating of flange 38 with groove 52 helps to ensure that bolt 30 will retain its position and vane assembly flange 42, seal 44, inner duct segment assembly 46, and spacer 48 will remain connected, even before self-locking nut 54 is attached from distal end 32A of shank or if self-locking nut 54 is detached from distal end 32A of shank 32.

Assembly 40 is shown as an example of an assembly in which bolt 30 in accordance with the present invention may be incorporated into. Bolt 30 is suitable for use in any other assembly where a bolt connects components together. If a component does not include a groove for flange 36 and/or 38 to mate with, a corresponding groove can be formed in the component.

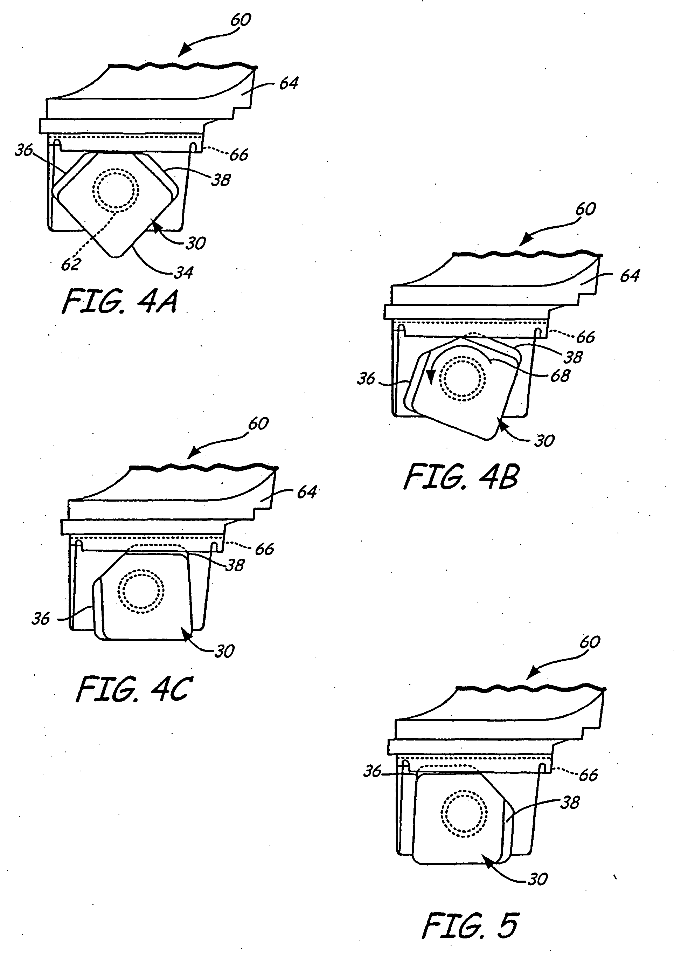

FIGS. 4A-4C illustrate three different orientations of bolt 30 as bolt 30 is installed in assembly 60 (which may be, for example, gas turbine vane assembly 40 of FIG. 3). When bolt 30 is first introduced into opening 62 (shown in phantom) in one or more components of assembly 60, bolt 30 is in a first orientation, as shown in FIG. 4A. Bolt 30 only includes one orientation that allows it to be introduced into opening 62 (shown in FIG. 4A) due to the configuration (or shape) of head 34 of bolt 30, which is configured (or shaped) to resist rotation when torque is applied. If bolt 30 is rotated to either of the orientations shown in FIGS. 4B or 4C, head 34 of bolt interferes with mating part 64, and bolt 30 resists introduction into opening 62. Opening 62 may be in mating part 64 or in another part. Mating part 64 includes groove 66 (shown in phantom), which is configured to mate with flanges 36 and 38.

FIG. 4B shows an installation step following the step shown in FIG. 4A, where bolt 30 is rotated in a counterclockwise direction (shown by arrow 68) in order to engage flange 38 with groove 66 in mating part 64, and thus secure bolt 30 in position. As known in the art, an "assembly" torque is applied to rotate slab head 34 bolt 30 in direction 68. FIG. 4C shows a final orientation of bolt 30 after flange 38 is mated with groove 66. In this orientation, flange 38 fully engages groove 66, thus retaining bolt 30 in position, and allowing bolt 30 to resist movement in a direction along longitudinal axis 56 (shown in FIG. 3) of bolt 30. Bolt 30 can be released from opening 62 by rotating bolt 30 to the orientation shown in FIG. 4A, which releases flange 38 from groove 66.

In FIG. 5, bolt 30 is rotated about 90° in a clockwise direction, which may occur, for example, if a disassembly torque is applied to bolt 30. As shown in FIG. 5, the two generally perpendicular flanges 36 and 38 of bolt 30 enable bolt 30 to remain engaged with groove 66 at disassembly. After a disassembly torque is applied to bolt 30, flange 36 engages with groove 66 in mating part 64. Without flange 36, bolt 30 would no longer remain engaged with groove 66 and bolt 30 could potentially move in a direction along its longitudinal axis. It may be desirable for bolt 30 to retain its position at disassembly if assembly 60 is a part of an apparatus that is sensitive to loose parts (e.g., a loose bolt may interfere with the operation of a gas turbine engine). Furthermore, if only one component is being disconnected from assembly 60, bolt 30 should remain in place in order to connect the remaining components of assembly 60. Of course, these rotation angles are provided as examples, and one skilled in the art can modify the position of flanges 36 and 38 with respect to head 34 in order to accommodate other rotation angles.

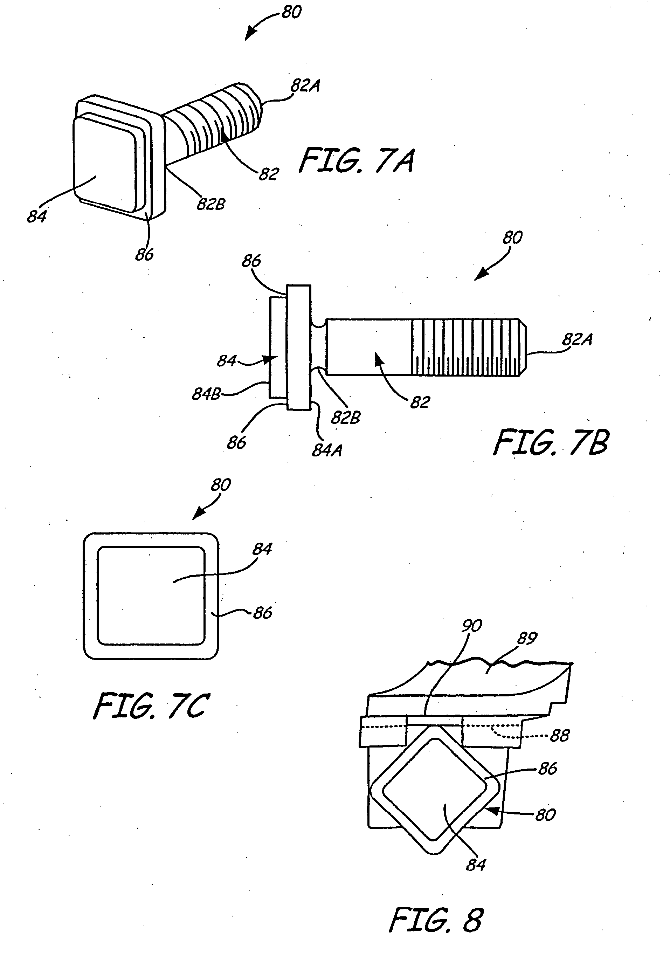

The present invention also includes bolts with flanges in different configurations than that of bolt 30. A second embodiment of a bolt is illustrated in FIGS. 6A-6C, and a third embodiment of a bolt is illustrated in FIGS. 7A-7C.

FIG. 6A is a perspective view of bolt 70 in accordance with a second embodiment of the present invention. Bolt 70 includes shank 72, with distal end 72A and proximal end 72B, and head 74, which is adjacent to proximal end 72B of shank 72. As with bolt 30 of FIGS. 2A-2C, head 74 and shank 72 can be an integral unit or separate pieces that are attached to each other. Bolt 70 is similar to bolt 30 of FIGS. 2A-2C, except that flanges 76 and 78 on head 74 of bolt 70 are generally parallel to each other, rather than generally perpendicular, as with flanges 36 and 38 of bolt 30.

FIG. 6B is a plan view of bolt 70 of FIG. 6A; and illustrates flanges 76 and 78 extending from head 74. Both distal end 72A and proximal end 72B of shank 72 are tapered. One skilled in the art may modify the dimensions of shank 72, head 74, and flanges 76 and 78 in accordance with the particular application of bolt 70. Just as with head 34 of bolt 12 of FIGS. 2A-2C, in an alternate embodiment, flanges 76 and 78 are adjacent to proximal end 74B of head 74, rather than adjacent to distal end 74A, as shown in the embodiment shown in FIG. 6B.

FIG. 6C is a plan view of bolt 70 of FIG. 6A and illustrates flanges 76 and 78 extending from head 74. Because of the shape of flanges 76 and 78, head 74 includes a U-shaped protrusion.

FIG. 7A is a perspective view of bolt 80 in accordance with a third embodiment of the present invention. Bolt 80 includes shank 82, with distal end 82A and proximal end 82B, and head 84, which is adjacent to proximal end 82B of shank 82. As with bolt 30 of FIGS. 2A-2C, head 84 and shank 82 can be an integral unit or separate pieces that are attached to each other. Bolt 80 is similar to bolt 30 of FIGS. 2A-2C and bolt 70 of FIGS. 6A-6C, except head 84 includes flange 86, which extends around a full circumference of head 84, rather than including two separate flanges on two sides of head 84, as with flanges 36 and 38 of bolt 30 and flanges 76 and 78 of bolt 70.

FIG. 7B is a plan view of bolt 80 of FIG. 7A, and illustrates flange 86 extending from head 84. As with bolt 70 of FIGS. 6A - 6C, both distal end 82A and proximal end 82B of shank 82 are tapered. One skilled in the art may modify the dimensions of shank 82, head 84, and flange 86 in accordance with the particular application of bolt 80. Just as with the first and second embodiments of bolt 12 and bolt 70, respectively, flange 86 is adjacent to proximal end 84B of head 84 in an alternate embodiment, rather than adjacent to distal end 84A of head 84, as shown in the embodiment of FIG. 7B.

FIG. 7C is a plan view of bolt 80 of FIG. 6A and illustrates flange 86 extending around a full circumference of head 84.

In some embodiments, a groove in a mating part must be interrupted in order to introduce flange 86 into the groove. FIG. 8 illustrates one embodiment of groove 88 (shown in phantom) in mating part 89, where the groove 88 includes gap 90. Because flange 86 of bolt 80 extends around the full circumference of head 84 of bolt 80, it is difficult for flange 86 to access groove 88. Gap 90 provides an access opening to groove 88. As FIG. 8 illustrates, with the particular size and configuration of gap 90, head 84 of bolt 80 must be in a specific orientation in order for head 84 to fit within gap 90. Bolt 80 may subsequently be rotated in a counterclockwise (or clockwise) direction in order to engage flange 86 with groove 80.

The present invention is a bolt that includes a flange configured to engage with a groove in a component in order to limit movement of the bolt in a direction along its longitudinal axis. While three embodiments of bolts in accordance with the present invention are described above, other bolt designs are also contemplated. For example, the shape of the bolt head and/or the exact location of the flanges may be modified in alternate embodiments without departing from the scope of the invention.

The terminology used herein is for the purpose of description, not limitation. Specific structural and functional details disclosed herein are not to be interpreted as limiting, but merely as bases for teaching one skilled in the art to variously employ the present invention. Although the present invention has been described with reference to preferred embodiments, workers skilled in the art will recognize that changes may be made in form and detail without departing from the scope of the invention.

## Claims

1. A bolt (30;70;80) comprising:
a shank (32;72;82) including a distal end (32A;72A;82A) and a proximal end (32B;72B;82B); and
a head (34;74;84) adjacent to the proximal end (32B;72B;82B) of the shank (32;72;82) and including a retention flange (36,38;76,78;86) configured to engage with a groove (52;88) in a component.

2. The bolt of claim 1, wherein the shank (32;72;82) is threaded along the distal end (32A;72A;82A).

3. The bolt of claim 1 or 2, wherein the head (34;74;84) is a shape selected from a group consisting of: a slab head and a D-head.

4. The bolt of any preceding claim, wherein the retention flange (86) extends around a full circumference of the head (84).

5. The bolt of claim 1, 2 or 3, wherein the head (34) comprises:
a first side;
a second side generally perpendicular to the first side;
a third side generally perpendicular to the second side;
a fourth side generally perpendicular the third side; and
a fifth side extending between the first side and the fourth side.

6. The bolt of claim 5, wherein the retention flange includes:
a first retention flange (36) positioned along the first side of the head; and
a second retention flange (38) positioned along the fourth side of the head.

7. The bolt of claim 1, 2 or 3, wherein the retention flange comprises:
a first flange (76); and
a second flange (78) generally parallel to the first flange.

8. The bolt of claim 1, 2 or 3, wherein the retention flange comprises:
a first flange (36); and
a second flange (38) generally perpendicular to the first flange (36).

9. A bolt assembly comprising:
a component comprising a groove (52;88); and
a bolt (30;70;80) as claimed in any preceding claim.

10. The bolt assembly of claim 9, wherein the head (34;74;84) of the bolt (30;70;80) is shaped to resist rotation with respect to the component.

11. The bolt assembly of claim 10, wherein the head (34;74;84) of the bolt (30;70;80) is a shape selected from a group consisting of: a slab head and D-head.

12. The bolt assembly of claim 9, 10 or 11, wherein the retention flange of the head of the bolt extends around a full circumference of the head and the groove (88) in the component includes a gap (90).

13. The bolt assembly of any of claims 9 to 12, wherein the component is a gas turbine engine component.

14. The bolt assembly of any of claims 9 to 13, wherein the component comprises:
a first component; and
a second component adjacent to the first component, wherein the groove is defined by a space between the first and second components.

15. A method of attaching a first component (42) comprising a first opening (50) and a groove (52) and a second component (49) comprising a second opening (50), the method comprising:
aligning a bolt (30;70;80) as claimed in any of claims 1 to 8 with the first and second openings (50);
introducing the bolt (30;70;80) into the first and second openings (50); and
rotating the bolt in order to engage the retention flange (36;38;76;78;86) with the groove in the first component (42).

16. The method of claim 15, and further comprising:
attaching a fastening apparatus (54) onto the shank (32;72;82) of the bolt (30;70;80), wherein the head (34;74;84) of the bolt (30;70;80) and the fastening apparatus (54) are on opposite sides of the first and second components.
